# EUROPEAN PATENT SPECIFICATION

(11) **EP 2 153 293 B1**
(45) Date of publication and mention of the grant of the patent: **18.04.2012**
(21) Application number: 08750564.0
(22) Date of filing: 12.05.2008
(51) Int. Cl.: G05D 11/13

(54) **SYSTEMS FOR SELF-BALANCING CONTROL OF MIXING AND PUMPING**
SYSTEME ZUR SELBSTAUSGLEICHENDEN STEUERUNG VON MISCH- UND PUMPVORGÄNGEN
SYSTÈMES POUR AUTO-ÉQUILIBRER AUTOMATIQUEMENT LA COMMANDE DE MÉLANGE ET DE POMPAGE

(30) Priority: 11.05.2007 US 803149; 11.05.2007 US 803151
(43) Date of publication of application: 17.02.2010
(73) Proprietor: Halliburton Energy Services, Inc., Duncan, OK 73533 (US)
(72) Inventor: DYKSTRA, Jason, D., Carrollton, TX 75007 (US)
(74) Representative: Curtis, Philip Anthony
(86) International application number: PCT/GB2008/001629
(87) International publication number: WO 2008/139171

(56) References cited:
- EP-A- 0 698 412
- US-A- 5 289 877
- US-A- 5 775 803
- US-A1- 2006 235 627

## Description

The present disclosure is directed to control systems for mixing and pumping systems, and more particularly, but not by way of limitation, to control systems for well service fluids, well cement preparation, and well fluid delivery systems used in hydrocarbon well bore servicing applications.

### BACKGROUND AND SUMMARY OF THE INVENTION

A control system typically comprises one or more physical system components employing a logic circuit that cooperate to achieve a set of common process results. In a mixing and pumping operation, the objectives can be to achieve a particular composition and flow rate for the resulting mixture.

The control system can be designed to reliably control the physical system components in the presence of external disturbances, variations among physical components due to manufacturing tolerances, and changes in inputted set-point values for controlled output values. Control systems usually have at least one measuring device, which provides a reading of a process variable, which can be fed to a controller, which then can provide a control signal to an actuator, which then drives a final control element acting on, for example, a flow stream. Examples of a of final control elements include flow control valves and speed controlled pumps.

The control system can be designed to remain stable and avoid oscillations within a range of specific operating conditions. A well-designed control system can significantly reduce the need for human intervention, even during upset conditions in an operating process.

In a hydrocarbon well bore servicing process, a control system can be used when mixing materials to achieve a desired mixture composition and flow rate, For example, when drilling an oil or gas well, it is common to install a tubular casing into the well bore and to cement the casing in place against the well bore wall. A cement mixing system that supports well bore servicing operations can be designed with a control system configured to provide a desired volumetric or mass flow rate of mixed cement having a desired density or composition in order to achieve desired properties of the cured cement. In particular, the cement mixing control system can control valves to regulate the in-flow of dry cement material and water into a mixing system to obtain the desired cement mixture density and desired cement mixture volumetric or mass flow rate out of the mixing system. The control system can operate, for example, by monitoring the cement mixture flow rate and density, and by regulating an in-flow water control valve and an in-flow dry cement material control valve. But sometimes, the amount of instrumentation available at well service sites is limited. For example, a water flow meter can be routinely present because measuring devices such as turbine meters or Coriolis mass flow meters are reliable and easy to maintain. However, solids flow meters, such as a weigh belt feeder, are much more difficult to service and to keep in calibration. Thus, such solids flow measuring devices are often not present. So, the control system is faced with a challenge as to how to monitor flow rates of a powdered solid, such as cement, without actually measuring the flow rate.

During a well bore cementing operation, the mixed cement is pumped down- hole at a target rate. Sometimes, supply of a particular component can get interrupted momentarily or constrained somehow (e.g. a supply constraint), and can cause a control disturbance to an automatic control system controlling the supply valve actuators and pumping system. For example, dry cement can be supplied from unitized storage systems, e.g. "pods", that require change-over when they become empty, and thus, momentary interruption of the supply of dry cement can occur. For another example, the flow rate of a particular material can be unintentionally and/or unknowingly restricted due to a partial blockage of a supply line. For example, dry cement can pick-up moisture and begin to coat the interior of pipes, or collect at conduit elbows or valves, resulting in a restriction.

One skilled in the art of hydrocarbon well serving can appreciate the volume and speed at which well service fluids are prepared and pumped down-hole in a substantially time-sensitive manner with little or no chance to correct an error, since, for example, a slug of defectively-mixed cement can end-up a mile or more underground. When a supply interruption or constraint occurs, the control system can be faced with a challenge, especially when limited flow rate information is available, as to how to best react to balance quality control of the service fluid, e.g. density control, and the required supply rate, e.g. barrels per minute of fluid demanded down-hole.

Accordingly, a need exists for a mixing control system and a mixing control method that partially couples the effects of changes in the supply availability of the materials to be mixed with the desired supply rate and desired quality of the final mixture.

EP 0698412 discloses a system for delivering a proper proportion of water and starch to form a slurry on a continuous basis responsive to the rate required for the production of gypsum board. The system include a water input controller and a starch input controller to control the rate of water and starch input to a mix/hold tank and a starch output controller to control the output of slurry from the mix/hold tank to the gypsum board production line.

US 5775803 discloses an automatic cementing system and method for precisely controlling the density of a slurry during a continuously mixed cement application. The system includes an input water line and a dry cement hopper for supplying water and cement, respectively, to a mixing chamber.

The present invention provides a control system for continuously mixing at least two materials as set forth in independent claim 1; and a method for continuously mixing at least two materials as set forth in independent claim 6. The preferred features are defined in the dependent claims.

Control systems for the continuous mixing of at least two materials. A control system comprises at least a first actuator and a second actuator, each operable to control the flow rate of a material into a mixing process. The control system also has a third actuator operable to control the discharge rate of the mixture flow stream leaving the mixing process, and a logic circuit operating at least the three actuators. The logic circuit receives a desired target for a particular property of the mixture flow stream and a desired target for the discharge rate of the mixture flow stream. The logic circuit operates at least the first and second actuators to maintain the property of the mixture discharge flow stream at the desired target value. The logic circuit operates the third actuator to maintain the discharge rate of the mixture flow stream at the desired flow rate but can adjust the discharge rate based on the occurrence of a material supply constraint for the material flowing through either or both of the first and second actuators. A material supply constraint can be a limitation in the availability of supply of the materials.

In some embodiments (but not necessarily all), the disclosed ideas are used to control the mixing and pumping of hydrocarbon well service fluids.

In some embodiments (but not necessarily all), the disclosed ideas are used to control the mixing and pumping of cement for cementing a casing to a hydrocarbon well bore.

In some embodiments (but not necessarily all), the disclosed ideas are used to control the mixing and pumping of fracturing and propping fluids for performing a subterranean fracturing process for a hydrocarbon well.

In some embodiments (but not necessarily all), the disclosed ideas are used to control at least one property of a fluid mixture flow stream to a desired target as a first priority where the desired target flow rate of the stream is also maintained at target, but is adjusted in response to supply constraints within the physical system.

The disclosed innovations, in various embodiments provide one or more of The disclosed innovations, in various embodiments provide one or more of at least the following advantages: at least the following advantages:
- Improved control of the physicals properties of well service fluids resulting in improved consistency of the quality of such fluids being pumped down-hole during a well service operation;
- Reduced labor for preparation and supply of well service fluids;
- Reduced uncertainty in the operation of well service fluid supply systems; and/or
- Reduced dependency on human intervention and decision-making during well service fluid supply.

These and other features and advantages will be more clearly understood from the following detailed description taken in conjunction with the accompanying drawings and claims.

### BRIEF DESCRIPTION OF THE DRAWINGS

The disclosed innovations will be described with reference to the accompanying drawings, which show important simple embodiments of the invention and which are incorporated in the specification hereof by reference.
**Figure 1** is one embodiment of the present innovations.
**Figure 1A** is a diagram of one embodiment of a physical plant embodiment within which a control system and a control method for a mixing and pumping system can be implemented and which can benefit from one or more of the present innovations.
**Figure 1B** shows a diagram of one embodiment of the methods of the present innovations.
**Figure 2A** shows a block diagram of a preferred embodiment of the virtual flow rate control systems and methods of the present innovations.
**Figure 2B** shows a block diagram of a preferred embodiment of the physical discharge rate control systems and methods of the present innovations.
**Figure 2C** shows a block diagram of one embodiment of the mixing process hold-up control systems and methods of the present innovations.
**Figure 2D** shows a block diagram of one embodiment of the in-feed flow rate control systems and methods, systems and methods for flow rate control for a first material, systems and methods for flow rate control for a second material, all according to the present innovations.
**Figure 2E** shows a block diagram of a preferred embodiment of systems and methods for flow rate control for a second material according to the present innovations.
**Figure 2F** shows a block diagram of one embodiment of systems and methods for the supply constraint checking stage for a first and a second material according to the present innovations.
**Figure 2G** shows a block diagram of a preferred embodiment of systems and methods for the supply constraint checking stage for a first and a second material according to the present innovations.
**Figure 2H** shows a block diagram of a preferred embodiment of systems and methods of the present innovations where a first material is water and a second material is dry cement powder.
**Figure 3** is a graph of a simulation of cement density control versus time using the system and method of **Figure 2H** applied to the physical plant of **Figure 1A** compared against a current control method.
**Figure 4** is a graph of the simulation conducted for **Figure 3** showing of mixed cement discharge flow rate versus time using the system and method of **Figure 2H** applied to the physical plant of **Figure 1A** compared against a current control method.
**Figure 5** is a graph of the simulation conducted for **Figure 3** showing the cumulative amount of out-of-specification mixed cement versus time using the system and method of **Figure 2H** applied to the physical plant of **Figure 1A** compared against a current control method.
**Figure 6** illustrates one example of a general purpose computer system suitable for implementing the control systems and methods of the present innovations.

### DETAILED DESCRIPTION OF THE PREFERRED EMBODIMENTS

The numerous innovative teachings of the present application will be described with particular reference to the presently preferred embodiment (by way of example, and not of limitation).

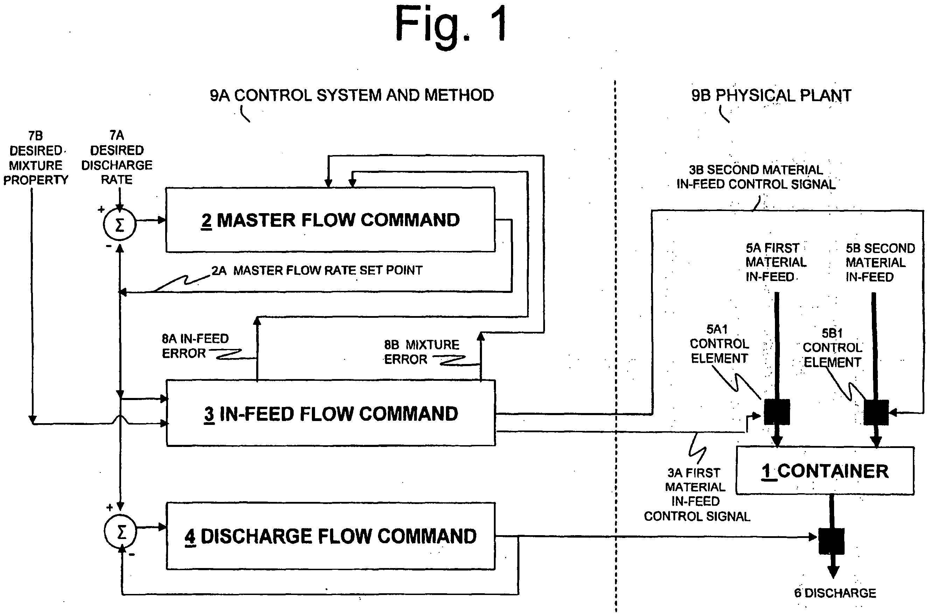

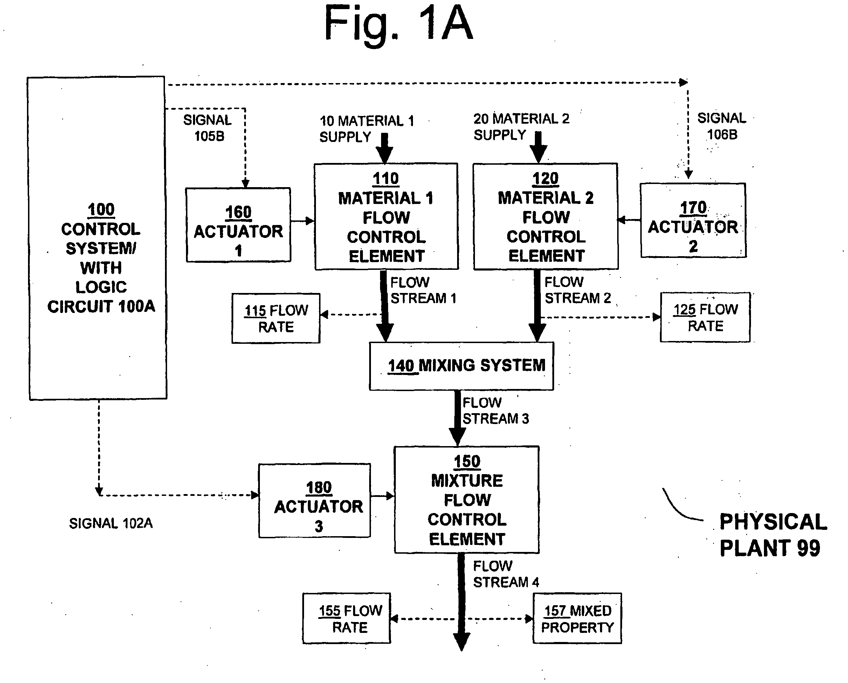

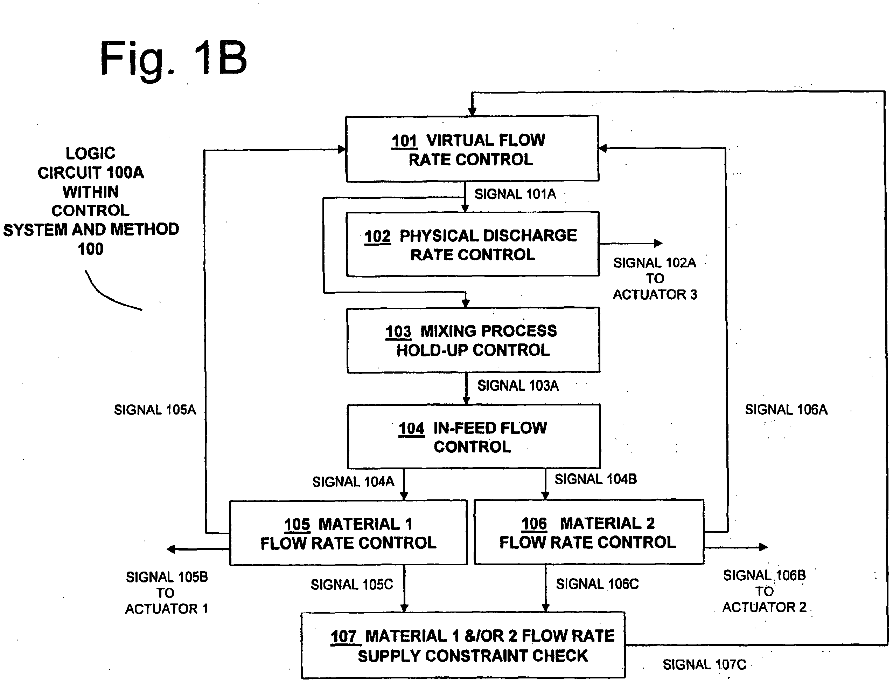

**Figure 1** shows one embodiment of the present innovations comprised, of control system and method **9A** and physical plant **9B**. A desired discharge flow rate **7A** can be inputted into control system and method **9A** for the mixture discharge flow rate out of container **1**. A desired value for a property of the mixture **7B** can be inputted as well.

Master flow command **2** can provide a master flow rate set point control signal **2A** to in-feed flow command **3** and discharge flow command **4** based at least on the difference between the desired rate **7A** and the master flow rate setpoint **2A**. In-feed flow command **3** can provide master flow command an indication of the in-feed error **8A**, of at least a first material, based on, for example, the difference between the present in-feed flow rate and the present master flow rate set point **2A**. In-feed flow command 3 can provide master flow command an indication of the mixture property error **8B**, based at least on the difference between the desired mixture property value 7B and a sensed property value. Master flow command can adjust the master flow rate setpoint in part based on the indications **8A** and **8B**.

Command stage **3** can provide in-feed flow rate control signals to the actuators and/or final control elements controlling in-feeds **5A** and **5B** to control the resulting mixture property. This is done by varying the relative values of the signals. Stage **3** can also control the total flow rate into the container by adjusting the values up or down while maintaining the ratio of the signals. By employing master flow rate command stage **2**, constraints in the supply of materials to container **1** can be quickly reflected in a reduction of the flow rate out of the container.

**Figure 1A** shows a physical plant **99** to which the present innovations can be applied. An element of the physical plant can be mixing system **140**. In one embodiment, system **140** can be a simple mixing tank with an agitator, along witch the necessary piping, electrical, material transport, and structural components as known to one skilled in the art of mixing. In another embodiment, the mixing system can consistent of two or more tanks in series, in parallel, or in various arrangements. The mixing system can be an atmospheric pressure system or a system under pressure or vacuum. The mixing system can be for two or more fluids, two or more solids, one fluid and one solid, or various combinations thereof. A preferred embodiment is one fluid as "material 1" and one flowable particulated solid as "material 2." In the preferred embodiment, the mixture resulting from system **140** is a solid-liquid slurry or mixture (flow stream 3), such as mixed cement.

Another element of the plant can be mixture flow control element **150**. In a preferred embodiment, system **150** is a flow-controlled pump such as a speed-controllable positive displacement pump or a centrifugal pump, with a flow control valve. Other kinds of pumps can also be utilized including gear pumps, lobe pumps, peristaltic pumps, vane pumps, piston pumps, progressive cavity pumps, plunger pumps, or various combinations thereof. In other embodiments, element **150** can be a screw conveyor or a belt conveyor for the control of solids flow. Other kinds of solids flow control devices can be used including rotary valves, slide gates, screw feeders, augers, or various combinations thereof. For gases and vapors, element **150** can be a speed-controlled compressor or a flow control valve.

The flow discharge rate from mixing system **140** can be controlled by element **150** which receives and controls the discharge of system **140** in its entirety. Thus, the flow rate at location **155** can be the same as the mixing system discharge flow rate (e.g. flow stream **3**) and the mixed property at location **157** for flow stream **4** has substantially the same value as that discharging from system **140** for flow stream **3**.

Material flow control elements **110** and **120** can be flow control valves which receive materials from material supplies **10** and **20**, respectively. In the case of solids, elements **110** and **120** can, again, be screw or belt conveyors, or other solids flow control devices known to one skilled in the art of solids handling. In a preferred embodiment, element **110** is a water flow control valve and element **120** is a dry powder flow control valve.

In a preferred embodiment material **1** is water and supply **10** is a source of water, such as a supply tank or supply pipe. In a preferred embodiment, material **2** is a dry cement powder and supply **20** is a bin (e.g. pod) of cement powder. Supply **20** can also be a hopper car of dry powdered cement. In a preferred embodiment, the mixture is mixed (wet and flowable) cement. Other kinds of materials and mixtures can benefit from the present innovations including sea water, re-used process water, carrier fluid, dry cement material, sand, fluid rheology modifying materials, cement property modifying materials, cement accelerators, fracturing fluids, proppant fluids, acidizing fluids, flushing fluids, drilling mud components, and proppants, or various combinations thereof.

The present innovations can include actuators **160, 170,** and **180**. Actuators can convert signals from control systems into actions such as movement of a control valve shaft or the change of speed of a pump. Signals to actuators can at least be electrical, pneumatic, hydraulic, acoustic, or electromagnetic radiation, or various combinations thereof. Actuators can at least be of various kinds, including variable speed motors, variable speed drives, pneumatic actuators, electrical actuators, hydraulic actuators, rotary actuators, servo motor actuators, or various combinations thereof.

Mixed property **157** can be a determination, sensing, or measurement of the property of mixture being controlled by the relative proportions of at least material 1 and material 2. Various properties can be controlled, including density, material volume ratio, and weight or volume fraction of a material in the mixture, or various combinations thereof. Other properties can be indirectly controlled where such properties are dependent on, related to, or indicated by, say, the density of the mixture. For example, the viscosity of a cement slurry can be related to the density of the slurry. More importantly, the composition of the cement is related to the density of the cement.

The present innovations can include a logic circuit **100A** which is embodied in a control system such as system **100**. The present innovations can use the logic circuit to operate at least actuators such as actuators **160, 170,** and **180**.

Turning now to **Figure 1B**, one embodiment of the present innovations for the logic circuit **100A** within the control system **100** of Figure **1A** is shown. In this embodiment, the flow rate control of element **150** can be effected by physical discharge rate control stage **102**. Stage **102** can send control signal **102A** to control actuator **3** e.g. element **180**. Stage **102** can receive a flow rate command signal **101A** from virtual discharge rate control stage **101**.

Stage **101** can represent a virtual flow rate control system that can receive multiple inputs, perform calculations, and output a virtual flow rate command signal **101A** that is acted upon by other control actions. At a particular moment, the virtual rate from stage **101** can be different than the actual present physical discharge rate as commanded by stage **102**, such as immediately after a disturbance to the physical plant of Figure **1A****.** However, at steady state, the virtual rate and the actual discharge rate can be equal.

Mixing process hold-up control stage **103** can control the amount of materials contained in mixing system **140** as they are mixed. As the mixture is discharged from system **140,** the level in the system, for example, can drop. In the case of a fluid mixing and pumping system, for example, the pump must usually have a steady supply of fluid readily available to keep the pump primed with fluid. Otherwise, the pump can become "starved" and can begin to malfunction, cavitate, and/or not act as a reliable control element. Thus, it is desirable to maintain a hold-up of a fluid mixture in a mixing vessel (from which the pump is drawing from) to keep the pump "charged" with the mixture. As the level, for example, drops below a desired hold-up (e.g. the hold-up set point) in mixing system **140**, control stage **103** can send a signal **103A** to stage **104** to call for more in-feed of material 1 and material 2, for example. If the level increases above set point, then stage **103** can call for less in-feed.

In-feed flow control stage **104** also controls the relative values of individual material flow rates to mixing system **140** and thus can control the value of a property of the mixture to a desired set point. Mixture properties can be a physical property such as density or viscosity, or a compositional property such as percent solids or percent content of a particular component, as previously described. Stage **104** generally can act to control the ratio of the flow streams of a first and a second material. For example, if the property to be controlled is density, and the mixture is a two component mixture where each component has a different density, then stage 104 can effect the necessary ratio of the components by using knowledge of the density behavior of the mixture as related to composition. Stage **104** can output signal **104A** to material **1** flow rate control stage **105** and signal **104B** to material **2** flow rate control stage **106**. As the demand for in-feed is increased and decreased by stage **103**, stage **104** can maintain the ratio of materials **1** and **2**.

Material 1 flow rate control stage **105** can signal actuator **1** eg. element **160** to increase or decrease the flow rate of material **1** using signal **105B**. Material **2** flow rate control stage **106** can signal actuator **2** eg. element **170** to increase or decrease the flow rate of material **2** using signal **106B**.

Both stage **105** and **106** can signal virtual rate controller **101** with an indication of the error between the amount of flow actually in-feeding into mixing system **140** and the amount of material actually called for by stage **104**, using signals **105A** and **106A**, respectively. In a preferred embodiment, where material **1** is water and material is a dry cement powder, only signal **105A** is fed back to stage **101**.

Both stage **105** and **106** can signal supply constraint check stage **107** using signals **105C** and **106C**, respectively. Stage **107** can check to insure that enough supply is present in material supplies **10** and **20**. In a preferred embodiment where material **1** is water and material **2** is dry cement powder, and the mixture property being controlled is density, stage **107** infers that the supply of dry cement powder is constrained when the actual density falls below an estimated density (from an observer). In that event, stage **107** can send signal **107A** to stage **101**, which will act to signal stage **102** to slow-down the discharge rate, which will result in a slow down of the demand for both material **1** and material **2**, until the desired density can be achieved because the available supply of material **2** becomes sufficient to meet the called-for supply by stage **106**.

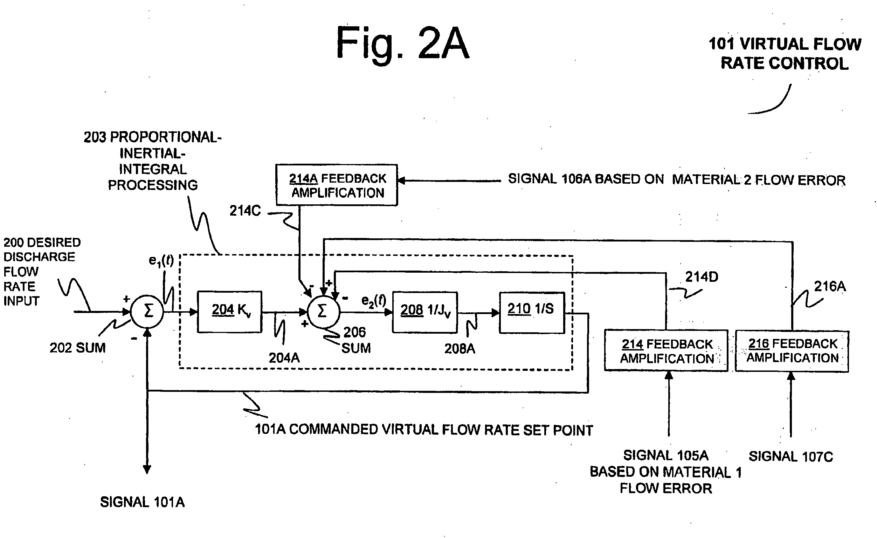

Turning now to **Figure 2A**, a block diagram shows processing details of one embodiment of virtual flow rate control stage **101**. A first summation stage **202**, represented by the ∑ symbol within a circle (as is conventional in mathematical and control notation), can determine a first error term e₁(*t*), by negatively summing the commanded virtual flow rate **210A** with mixture discharge flow rate desired value input **200**. Specifically, the inputs into a summing stage associated with a " + " (plus) sign are positively summed, while the inputs associated with a " - " (minus) sign are negatively summed. The output of first summation stage **202**; namely first error term e₁(*t*), can then be processed by a "Proportional-Inertial-Integral" processing operation **203** having a gain, **Kᵥ** for a proportional stage **204**, an inertia constant **Jᵥ** for an inertial damping stage **208**, and an integration stage **210**, represented by 1/S inside the box, as is conventional in control system art to suggest integration, After multiplication of e₁(*t*) by gain Kᵥ, stage **204** can output signal **204A** to summing stage **206** where it can be summed with amplified feedback **214C** from feedback amplification stage **214A**. which received signal **106A** based on a material **2** flow rate error, with amplified feedback **214D** from feedback amplification stage **214** which received signal **105A** based on a material **1** flow rate error, and from feedback amplification stage **216** which produced signal **216A** from signal **107C** indicating a material supply constraint. Stage **206** can output a second error term, e₂(*t*) to inertial damping stage **208**, which multiples e₂(*t*) by 1/Jᵥ. Stage **208** can output signal **208A** to integration stage **210**, which integrates and outputs the commanded virtual flow rate signal **210A**, for both feedback to summing stage **202** and feed-forward to other control stages.

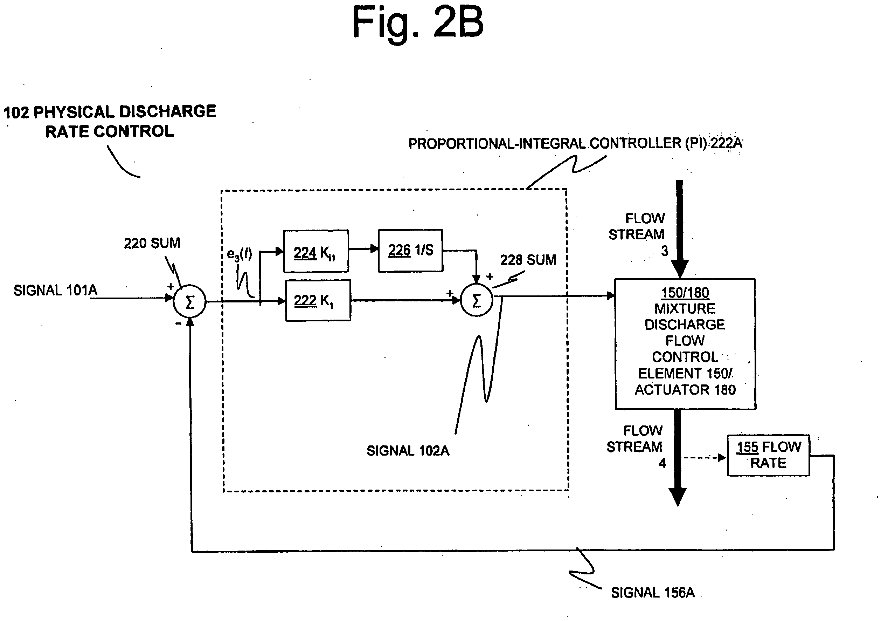

Turning now to **Figure 2B**, a block diagram shows one embodiment to effect physical discharge rate control **102** from mixing system **140** using mixture flow control element **150**. In Figure **2B**, a third summation stage **220** can determine a third error e₃(*t*) by summing the commanded flow rate **101A** with a negatived measurement or other determination of the actual flow rate **156A** such as that measured by flow rate sensor **155**. The output of stage **220** as e₃(*t*) can then be processed by a first proportional-integral **(PI)** controller **222A** having a gain **K**₁ for a proportional stage **222**, and integral gain **Kᵢ₁** for proportional stage **224**, and integrating stage **226**. The proportional and integral actions on error term e₃(*t*) can then be positively summed by a fourth summing stage **228**. The output of stage **228** as signal **102A** can be the command signal to actuator **3** e.g. element **180** to actuate mixture flow control element **150**. In a preferred embodiment combined stages **180** and **150** is a speed controlled positive displacement pump. Note flow rate determination **155** need not be a flow rate sensor. For example, the flow rate emerging from a positive displacement pump can be related to the number of strokes or revolutions per minute of the pump and therefore can be calculated rather than measured. One skilled in the art of pump flow determinations can readily appreciate such and other means of determining pump output without using a flow rate measuring sensor. Note also that although a PI controlling action is a preferred embodiment of stage **222A** of the present innovations, other controlling actions as known to one skilled in the art of pump or flow control can be used in place of or in combination with the PI controlling action.

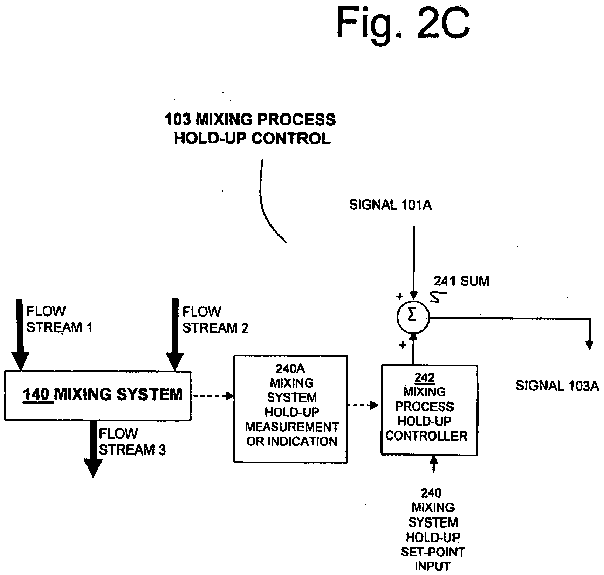

Turning now to **Figure 2C**, a block diagram shows one embodiment of a control action **103** for the amount of hold-up of material in a mixing system such as mixing system **140**. Commanded virtual flow rate signal **101A** can be fed to a fifth summing stage **241** which can sum signal **101A** with the output of a mixing process hold-up controller **242**. Stage **242** can be, for example, a proportional-integral-derivative (PID) liquid level controller in a mixing system, which has a set point input **240** and an indication or measurement of the amount of hold-up in the system as **240A**, which acts to control the amount of liquid "held-up" in, for example, a mixing tank. For example, liquid level can be indicated by the height of a liquid level in a mix tank. Other controller actions as known to one skilled in the art of process control can be used. The general action of stage **103** is to maintain the hold-up in, for example, mixing system **140**, by generating signal. **103A** to command stage **104** to increase or decrease the amount of total in-feed of materials **1** and **2**. For examples of hold-up determinations in mixing systems, see U.S. Patent Application entitled "Methods and Systems for Estimating a Nominal Height or Quantity of a Fluid in a Mixing Tank While Reducing Noise", by Jason Dykstra and Justin Borgstadt, filed January 4, 2005, Application Serial Number 11/029,072, Publication Number 20050161358, and U.S. Patent Application entitled "Process Control Architecture with Hyrdodynamic Correction", by Jason Dykstra and Medhi Mazoorree, Application Serial Numbers 11/545,750 and 11/545,751.

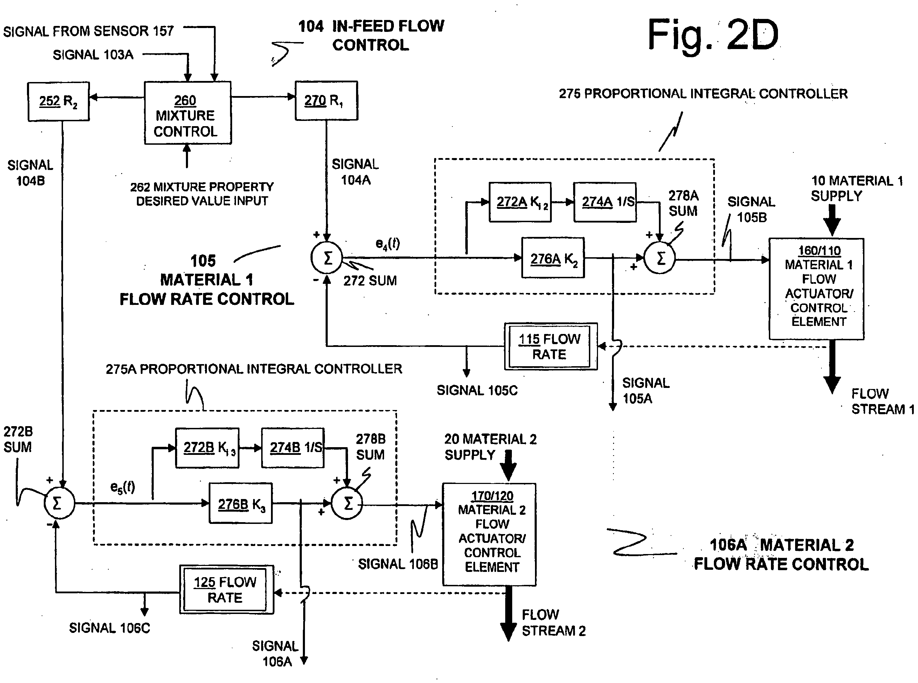

Turning now to **Figure 2D**, mixture control stage **260** can be used to effect both in-feed flow control and mixture property control by adjusting the relative proportions of material 1 and material 2 using flow modulators R₁ e.g. element **270** and R₂ e.g. element **252**, respectively. See U.S. Patent Applications 11/121,144, 111121,278, and 11/121,325. The output of modulators **270** and **252**, as signals **104A** and **104B** respectively, can be sent to material **1** flow rate control stage **105** and material 2 flow rate control stage **106A**, respectively.

For stage 105 as a preferred embodiment for control of flow of material **1**, a signal **104A** can be sent to a fifth summing stage **272** where it is summed with a negatived measurement of the flow rate of material **1** from flow rate determination stage **115**. A fourth error term can be generated as e₄(*t*) which can then be processed by a second proportional-integral (PI) controller **275** having a gain K₂ for a proportional stage **276A**, and integral gain K₁₂ for proportional stage **272A**, and intergrating stage **274A**. The proportional and integral actions on error term e₄(*t*) can then be positively summed by a sixth summing stage **278A**. The output of stage **278A** as signal **105B** can be the command signal to actuator 160 to actuate material 1 flow control element **110** to control the flow rate of flow stream **1** being sourced from material supply **10**. In a preferred embodiment stage **160/110** is an actuated control valve. Note flow rate determination **115** need not be a flow rate sensor as discussed previously. Note also that stage **105** can generate an output or indication of the flow rate of material 1 as signal **105C** for later use in signal processing.

For stage **106A** as one embodiment for control of flow of material 2, signal 104B can be sent to a sixth summing stage **272B** where it is summed with a negatived measurement of the flow rate of material 2 from flow rate determination stage **125.** A fifth error term can be generated as e₅(*t*) which can then be processed by a third proportional-integral (PI) controller **275A** having a gain K₃ for a proportional stage **276B,** and integral gain Kᵢ₃ for proportional stage **272B,** and integrating stage **274B.** The proportional and integral actions on error term e₅(t) can then be positively summed by a seventh summing stage **278B.** The output of stage 278B as signal **106B** can be the command signal to actuator 170 to actuate material 2 flow control element 120 to control the flow rate of flow stream 2 being sourced from material supply 20. Note that stage 106A can generate an output or indication of the flow rate of material 2 as signal **106C** for later use. Note also that flow rate determination 125 need not be a sensed measurement.

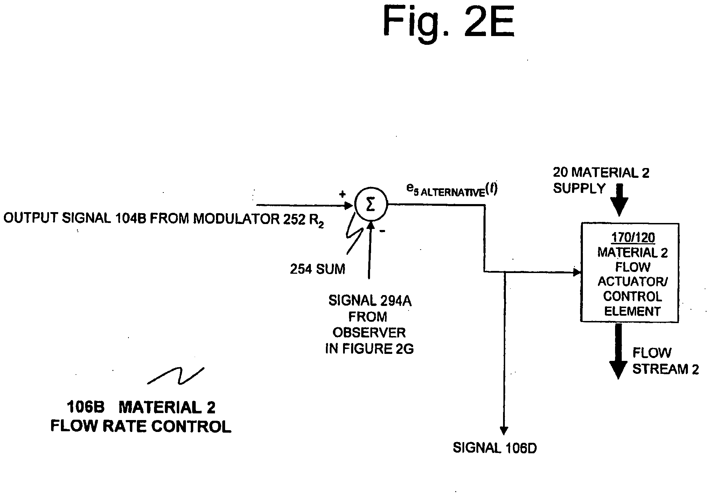

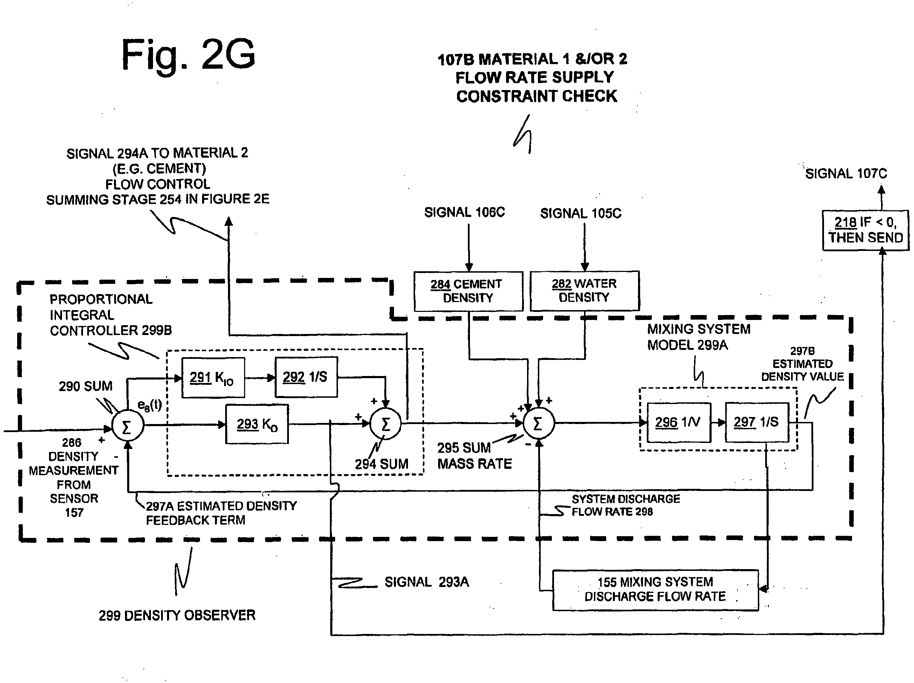

Turning now to **Figure 2E** for a preferred embodiment for flow control of material 2, a block diagram of a control system particularly suited for cement mixing is shown as material 2 flow rate control **106B** (which can replace material 2 flow rate control stage 106A previously described.) When mixing dry cement powder (as material 2) and water as material 1, accurate control of density is a priority as previously described. However, accurate sensing of the flow rate of cement powder for feed back to, for example, stage 275A in stage 106A, can sometimes not be possible or easily accomplished. In-fact, sensor 125 may not be present at all in some systems. In such situations, an observer can be utilized to supply an indication of the missing flow rate measurement. In Figure 2E, output signal 104B from modulator 252 R₂ can be fed to an alternative summing stage **254** for summing with a signal from observer which can be signal **294A** in **Figure** 2G. Summing stage 254 can generate an alternative: error signal e_{5 ALTERNATlVE(*t*)} which can then drive material 2 flow (e.g. cement) actuator/control element 170/120. Note that stage 106B can generate an output or indication of the flow rate of material 2 as signal **106D** which is an alternative to signal 106C from stage 106A.

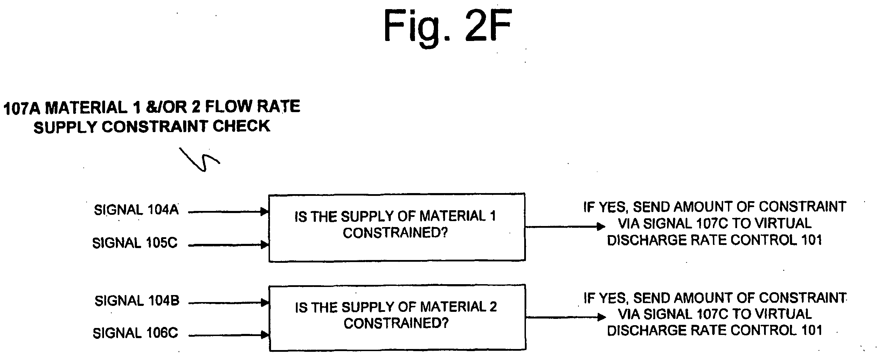

Turning now to **Figure 2F**, one embodiment as stage **107A** of the stage **107** material flow rate supply constraint check is shown. For a check for constraint of supply for material 1, the commanded amount of material 1 as indicated by signal 104A from modulator 270 R₁ can be compared against the amount of material 1 flow actually achieved as indicated by signal 105C. If the flow achieved is less than the flow commanded using a signal processing technique to adjust for non-steady state conditions, then a signal can be sent to virtual flow rate control stage 101 regarding the amount of the constraint, to be included in signal **107C.** Likewise, for a check for constraint of supply for material 2, the commanded amount of material 2 as indicated by signal 104B from modulator 252 R₂ can be compared against the amount of material 2 flow actually achieved as indicated by signal 106C. If the flow achieved is less than the flow commanded using a signal processing technique to adjust for non-steady state conditions, then a signal can be sent to virtual flow rate control stage 101 regarding the amount of the constraint, to be included in signal **107C.**

Turning now to **Figure 2G****,** a block diagram shows a preferred embodiment **107B** of the stage 107 material flow rate supply constraint check of Figure 1B. Note that Figure 2G should be construed using Figure 2E which uses material 2 flow rate control stage 106B, where in a preferred embodiment, dry cement as material 2 is being mixed with water and accurate density control is a priority. Note also that Figure 2G is an embodiment of some of the innovations of U.S. Patent Application 11/121,144 for a density observer to estimate the actual density of a mixture comprising a proportional integral controller responsive to a density error determined by subtracting a feedback estimated density from a sensed density. In Figure 2G, density observer **299** can include proportional integral controller, **299B** and mixing system model **299A** for mixing system 140. An eighth summing stage **290** can negatively sum an estimated density feedback term **297A** with a sensed density input. **286** to determine a sixth error term e₆(t); The error term can be processed by controller **2998** having a gain Kₒ for a proportional stage **293,** an integral gain Kᵢₒ for another proportioning stage **291,** an integrating action stage **292,** and a summing stage **294.** The output of PI controller 299B, which conforms to a mass flow rate, can be fed to summing stage **295,** to be positively summed with two density feed-forward inputs, from stages **282** and **284,** and negatively summed with system discharge flow rate **298** which can be from flow determination stage 155. As taught in U.S. Patent Application 11/121,144, these signal input can represent the physical- inputs into a mixing system as commanded in the preferred embodiment of the present innovations for cement by signal 106C and water for signal lost, and for mixing system output such as flow stream 3 discharging from mixing system 140. The output of summing stage 295 can be processed by the mixing system model 299A to yield an estimated density value **297B** for feedback to summing stage 290 as signal 297A. In Figure 2G, density observer 299 can produced two outputs. A first output as signal **294A** can be sent as an error signal for the density of the mixture to summing stage 254 in Figure 2E. A second output as signal 107C can be sent as a supply constraint indication to virtual discharge rate control action 101 if the value of signal **293A** is negative as checked in stage **218.**

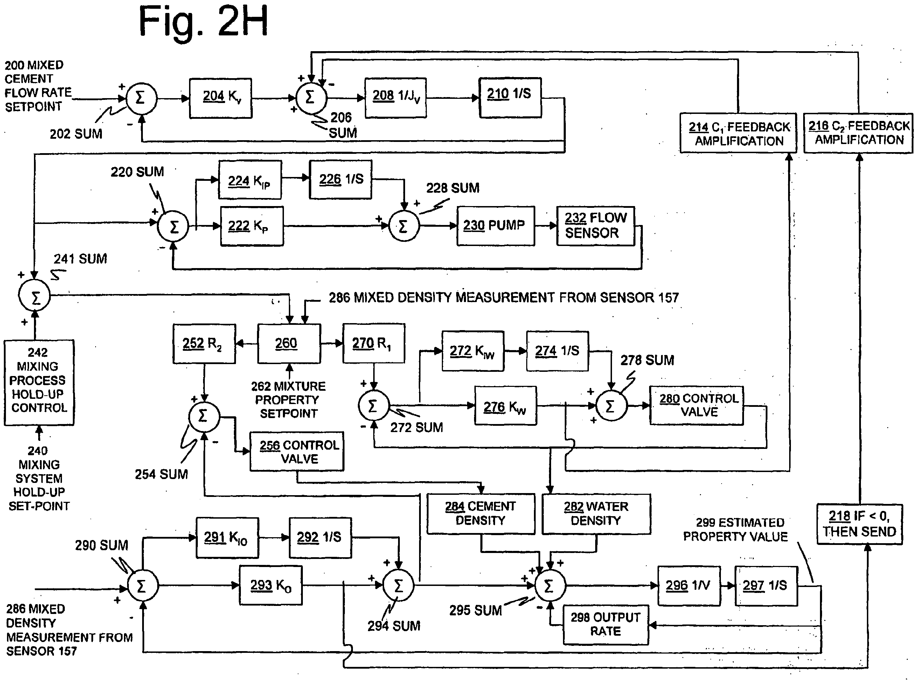

Turning now to **Figure 2H****,** a preferred embodiment of the present innovations is shown using an assembly and connection of the innovations detailed and described in Figures 2A, 2B, 2C, 2D, 2E, 2F, and 2G, for control actions 101, 102, 103, 104, 105, 106, and 107 as detailed in Figure 1B.

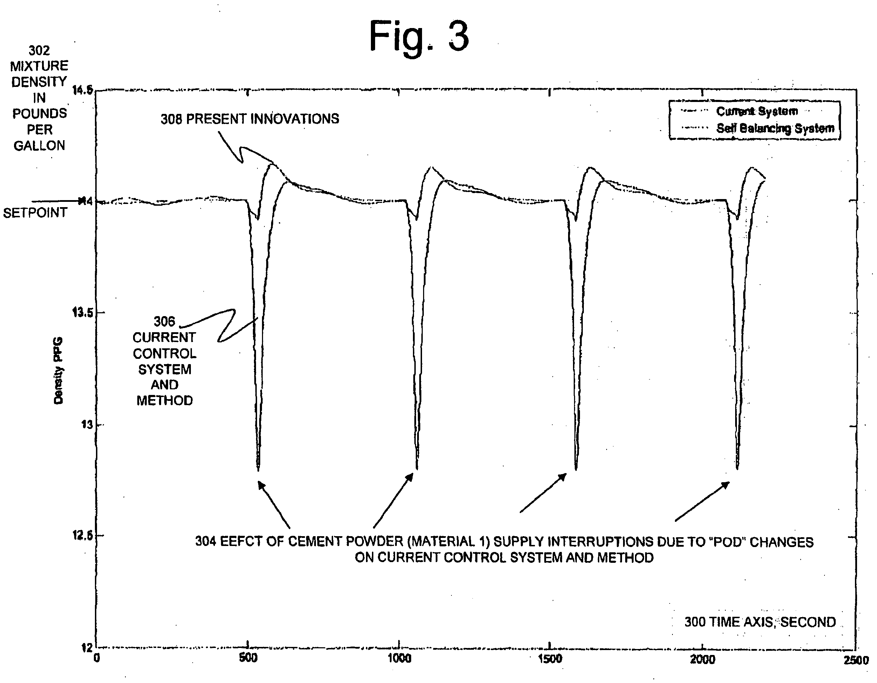

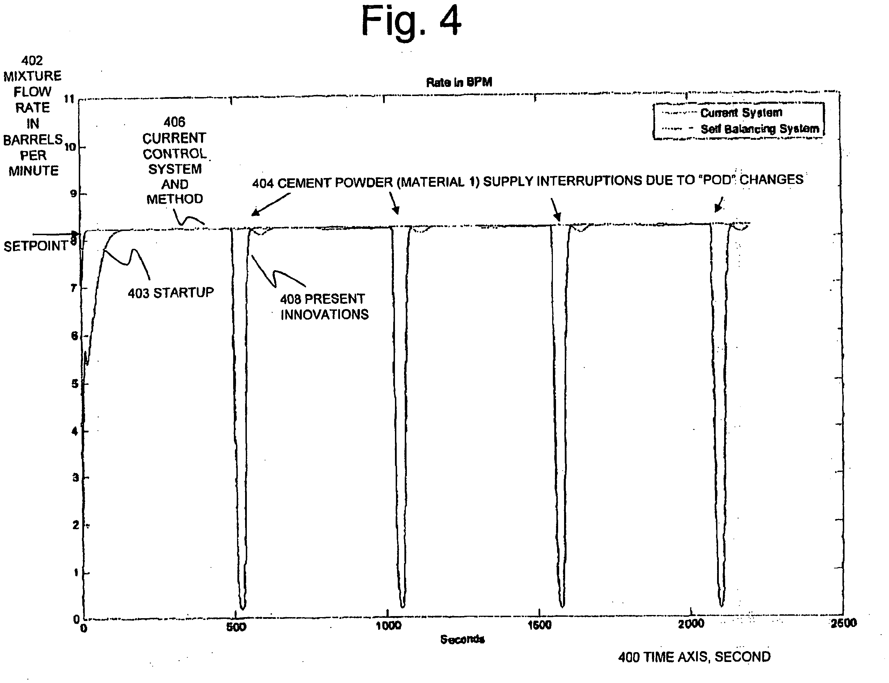

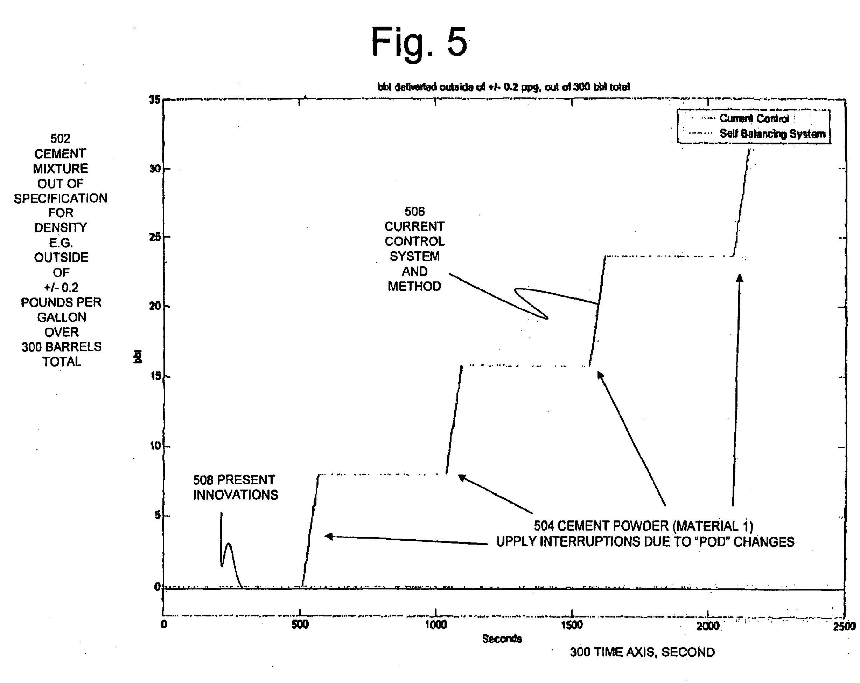

Turning now to **Figures 3****,** **4****,** and **5**, benefits of the present innovations as embodied in Figure 2H are illustrated. The physical system of Figure 1A was modeled in a control algorithm simulation program, "MATLAB", from The MathWorks, Inc., Natick, Massachusetts, USA. The model design and parameters were as follows: a mixing process system was continuously fed dry cement powder and water, as material 2 and material 1, respectively, for a period of about 2500 seconds, to simulate mixing of cement for cementing of a well casing, to a desired set point density of 14 pounds per gallon. A simulated pump was used to discharge the mixing system into the well bore annulus at a desired set point flow rate of 8.2 barrels per minute. A conventional control system was simulated to control the in-feeds and the discharge. Current system data was simulated and is shown as current control system data **306** in Figure 3, data **406** in Figure 4, and data **506** in Figure 5. In all three figures, the horizontal X-axis is the time axis in seconds. At approximately the 500, 1000, 1500, and 2000 second time points, an interruption to supply of cement powder was simulated to represent the cement "pods" being changed as previously described as occurring in actual operation of well cementing operations. These are shown as points **304, 404** and **504** on Figures 3, 4, and 5, respectively. In Figure 4, the data shows the current method flow rate was maintained at the desired discharge flow rate of about 8.2 barrels per minute almost immediately upon start-up. Because the current method does not self-balance the mixing system discharge rate against quality results for the cement being mixed, the data shows that as the cement is being pumped down-hole, the flow rate stayed constant at 8.2 barrels per minute, even during the pod changes. Figure 3 shows the simulated and calculated density results for the mixture being pumped down hole. For the current conventional control system, the data shows significant drops in density from the set point of 14 pounds per gallon, well beyond the specified tolerance for swings in density, which is usually set at about plus or minus 0.2 pounds per gallon. Because the flow of dry cement powder was interrupted at the pod changes, and because the dry powder has a higher specific density than that of water, the density dropped at the pod change points because supply of cement powder was constrained, and the density of the mixture began to approach the density of water, which is about 8.3 pounds per gallon. Figure 5 shows the simulated accumulation of out-of-specification cement mixture over about 30O barrels of total mixed- cement pumped. Thus, greater than 30 gallons total of off-specification mix was pumped in the simulation, which is about 10% off-quality for the total period. Next, a simulation model was built for control of the in-feed rates and the discharge rate using present innovations as embodied in Figure 2H. Again, at about every 500 seconds, cement powder flow was simulated as being interrupted for a cement pod change. Results for the present innovations are shown as data **308, 408,** and **508** in Figures 3, 4, and 5, respectively. In Figure 4, the control system and methods according to the present innovations self-balanced the flow rate at the pod change points, by automatically slowing the discharge pumping rate in response to a detected supply constraint for dry cement powder during the simulated pod changes. Figure 3 shows the simulated improvement in cement density control as data **308** where the density stays much nearer to the set-point of 14 pounds per gallon and within the cement density tolerance specification. Figures 5 shows the simulated nil accumulation of off-quality cement pumped during the simulated period.

According to a disclosed class of innovative embodiments, there is provided a control system for continuously mixing at least two materials, comprising: a mixing process; wherein said process receives at least two input flow streams and has one output flow stream for the resulting mixture; and a process control system acting on said mixing process wherein said control system is configured to: (i) as a first priority, provide a desired density.for said mixture; and (ii) as a lower priority; provide a desired flow rate for said mixture.

According to a disclosed class of innovative embodiments, there is provided a control system for continuously mixing at least two materials, comprising: (a) a first control element and a second control element, each operable to control the flow rate of an individual material feeding into a mixing process; (b) a third control element, operable to control the discharge flow rate from said mixing process; and (c) a control system connected to said control elements, comprising: (i) a first control stage for controlling the respective flow rates of individual materials feeding into a mixing process, with respect to a desired value of a property of the resulting mixture; and (ii) a second control stage for controlling the discharge flow rate from said mixing process in dependence on the difference between a sensed value and an estimated value for said property; wherein said difference can be due to a supply constraint of at least one of said individual materials; whereby the error between said desired value and said sensed value is reduced when said supply constraint occurs.

According to a disclosed class of innovative embodiments, there is provided a control system for continuously mixing at least two materials, comprising: (a) a first actuator and a second actuator, each operable to control the flow rate of an individual material feeding into a mixing process; (b) a third actuator, operable to control the discharge flow rate from said mixing process; and (c) a control system connected to said actuators; and configured to provide: (i) control of the respective flow rates of individual materials feeding into said mixing process, with respect to a desired value of the density of the resulting slurry; (ii) an estimate of the expected density of the mixed materials; wherein if the actual density of the mixed materials falls below the desired density, without corresponding change in any controlled variable, then said control system temporarily reduces the total flow rate through said process; whereby errors due to supply constraints on the dry material are temporarily ameliorated by reduced total flow; and (iii) a temporary reduction of said total flow rate if actuator response to commanded increases in supply flow of a liquid material component of the slurry is inadequate; whereby errors due to supply constraints on said liquid material are temporarily ameliorated by reduced total flow.

According to a disclosed class of innovative embodiments, there is provided a control system for continuously mixing at least two materials, comprising: (a) actuators and/or control elements for controlling the respective flow rates of individual materials feeding into a mixing process, based on a desired density for the resulting mixture; and (b) an actuator and/or a control element for controlling the discharge flow rate from said process, based on a master flow rate set point; and (c) a control system connected to said actuators and/or control elements for generating a master flow rate set point, based on: (i) the difference between a sensed value and an estimated value for said property; wherein said difference can be due to a supply constraint of at least one of said individual materials; and (ii) a desired discharge flow rate for said process.

According to a disclosed class of innovative embodiments, there is provided a control system for continuously mixing at least two materials, comprising: means for controlling the flow rates of materials into a mixing process; wherein said means provide control based on a desired density for the mixture resulting from said process; means for controlling the flow rate of the mixture discharging from said process; wherein said means provide control based on a master flow rate set point; means for detecting a material supply constraint for said materials flowing into said process; and means for generating said master flow rate set point; wherein said means generate said set point based on the occurrence of a said material supply constraint.

According to a disclosed class of innovative embodiments, there is provided a control system for continuously mixing water and cement, comprising; a cement mixing system, comprising: actuators which control the respective flow rates of water and cement into said mixing system with respect to a desired mixed cement density; and at least one pump for delivering the resulting wet mixed cement into a hydrocarbon well to thereby cement the casing to the well bore; wherein the flow rate generated by said pump is based on a desired pumping rate; and a control system which controls said actuators and said pump; wherein as a first priority, said control system operates to provide said desired density for said mixture.

### Modifications and Variations

As will be recognized by those skilled in the art, the innovative concepts described in the present application can be modified and varied over a range of applications, and accordingly the scope of patented subject matter is not limited by any of the specific exemplary teachings given. It is intended to embrace all such alternatives, modificatios and variations that fall within the broad scope of the appended claims.

The methods and systems of the present application can operate across a wide range of hydrocarbon well service fluid provision situations and conditions. One of ordinary skill in the art, with the benefit of this disclosure, will recognize the appropriate use of the methods and systems for a chosen application of a given or dynamic set of operating parameters.

Optionally, the methods and systems of the present application can be configured or combined in various schemes. The combination or configuration depends partially on the required mixture property and discharge flow rate control precision and accuracy and the operational envelope of the mixing process system being utilized. One of ordinary skill in the art of process control, with the benefit of this disclosure, will recognize the appropriate combination or configuration for a chosen application.

Optionally, flags such as a particular process variable out of range which may define the reliability of the data or provide variables to use for process control. One of ordinary skill in the art, with the benefit of this disclosure, will recognize the appropriate additional measurements that would be beneficial for a chosen application.

Optionally, such measurements taken by the methods and systems of the present application may also be sent to an external system for further processing or use. For example, if operating conditions exceed a target by a certain amount, this fact could be used to re-tune process controllers. Or, for example, flow rates having a large standard deviation beyond a preset level might be used for the same flagging determination to re-tune flow rate controllers.

Optionally, temperature compensation can be employed used to adjust for shifts in density using reference data sets relating temperature change to total fluid density change, or curves fitted to such reference data.

Optionally, because the density changes of different fluid compositions or recipes can vary from application to application, or across different embodiments, different reference data sets or curves or models fitted to such data sets may be employed, maintained, or stored in control system **100** or an external system connected to control system 100. One of ordinary skill in the art, with the benefit of this disclosure, will recognize the appropriate systems to employ for such temperature compensation methods.

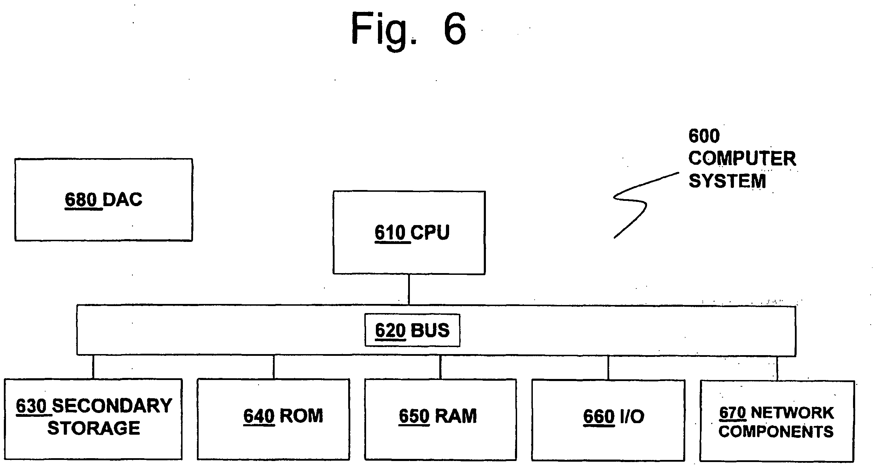

Optionally, the methods and systems of the present innovations can be implemented on general-purpose computers or laptop computer or microprocessor system, or an external computing and analysis system, in addition to being embodied in manufacturing control hardware, as long as such embodiments possess adequate computing resources, memory, and communication capacity to perform the necessary operations requested of them. **Figure 6** **shows** one embodiment of such a computer system **600** for implementing one or more embodiments of the methods and systems of the present innovations.

With respect to **Figure 6****,** system **600** includes central processor unit (CPU) **610** which can communicate with various system devices via communications BUS **620.**

Optionally, CPU **610** can execute codes, instructions, programs, and scripts which it accesses from various disk based systems which can be secondary storage **630,** ROM **640,** RAM **650,** or the network communication components **670.**

Optionally, the set of instructions to CPU **610** can comprise input instructions that receives data or models from an external system.

Optionally, system 600 can have more than one CPU chip to increase computing power and resources.

Optionally, various system devices can include memory devices such as secondary storage **630,** read only memory (ROM) **640,** random access memory (RAM) **6500.** System 600 can connect to other systems such as the systems of the present innovations via input/output (I/O) components **660** and network or communication components **670.**

Optionally, the signal outputs from system 600 to actuators and flow control elements can be- converted from a digital to an analog signal by a digital to analog converter (DAC) **680.**

Optionally, additional signal conditioning can be conducted on system 600 output signals to appropriately communicate with various control elements and actuators.

Optionally, secondary storage **630** can comprise one or more disk drives or tape drives for permanent storage of data and as extra memory if RAM 650 is not of sufficient capacity for a given operation. Secondary storage 630 can store programs that are loaded into RAM 650 if such programs are selected for running.

Optionally, ROM **640** can store instructions and data that can be read during the running of programs. ROM 640 is a non-volatile memory device.

Optionally, RAM **650** can be used to store data and to store computing instructions. Speed of access to ROM 640 and RAM 650 can be faster than to secondary storage 630.

Optionally, input/output components **660** can include video monitors, printers, touch screen displays, liquid crystal display, keyboards, keypads, on-off buttons, dials, mouse pointing devices, track balls, voice recognizers, card readers, tape readers, and various combinations thereof.

Optionally, network communications components **670** can be ethernet cards, universal serial bus interface cards, serial interfaces, token ring cards, fiber distributed data interface cards, modems, modem banks, wireless local area network cards, radio transceiver cards such as "Global System for Mobile Communications" radio transceiver cards, and various combinations thereof.

Optionally, components **670** can enable CPU 610 to communicate with an Internet or with intranets. In such communications, CPU 610 can receive information from the nets, or can output information to the nets. Such information can be a computer data signal embodied in a carrier wave or a baseband signal. The baseband signal or signal embedded in a carrier wave; or other types of signals currently used or hereafter developed, can be generated according to several methods well known to one skilled in the art.

Optionally, for digital communications, RS-422 or RS-485 can be used to allow links to control system **100** of Figure 1A or to an external computing and analysis system, or to multiple external units,

Optionally, a 4-20 milliamp analog output, signal can be used to allow external processing of the system measurements.

Optionally, the methods of the present invention can be embodied in a computer readable medium, including a compact disk.

None of the description in the present application should be read as implying that any particular element, step, or function is an essential element which must be included in the claim scope: THE SCOPE OF PATENTED SUBJECT MATTER IS DEFINED ONLY BY THE ALLOWED CLAIMS. The claims as filed are intended to be as comprehensive as possible, and NO subject matter is intentionally relinquished, dedicated, or abandoned.

## Claims

1. A control system for continuously mixing at least two materials, comprising:
(a) a first actuator (160) and a second actuator (170), each operable to control the flow rate of an individual material feeding into a mixing process;
(b) a third actuator (180), operable to control the discharge flow rate from said mixing process; and
(c) a control system (100) connected to said actuators; and configured to provide:
(i) control of the respective flow rates of individual materials feeding into said mixing process, with respect to a desired value of the density of the resulting slurry;
the control system is further **characterized by** providing:
(ii) an estimate of the expected density of the mixed materials; wherein if the actual density of the mixed materials falls below the desired density, without corresponding change in any controlled variable, then said control system temporarily reduces the total flow rate through said process; whereby errors due to supply constraints on the dry material are temporarily ameliorated by reduced total flow; and
(iii) a temporary reduction of said total flow rate if actuator response to commanded increases in supply flow of a liquid material component of the slurry is inadequate; whereby errors due to supply constraints on said liquid material are temporarily ameliorated by reduced total flow,

2. The system of Claim 1, wherein the control of said total flow rate is also based on a desired total flow rate through said mixing process.

3. The system of Claim 1, wherein said estimated value for said density is generated by a density observer or a volumetric observer.

4. The system of Claim 1, wherein the total flow rate of materials into said mixing process is controlled based on the hold-up of materials in said mixing process.

5. The system of Claim 4, wherein a height observer is used to estimate said hold-up of said mixing process.

6. A control method for continuously mixing at least two materials, comprising the actions of: -
(a) controlling the relative proportion and total flow rate of two materials entering a continuous mixing process to thereby achieve a desired total flow rate and a desired density of the resulting mixture; wherein said materials differ in density;
(b) maintaining an estimate of the expected density of said mixture;
(c) measuring the actual density of said mixture; and **characterized in that**:
(d) when said actions (b) and (c) produce inconsistent results, temporarily reducing said total flow rate.

7. The method of Claim 6, wherein said inconsistent results comprise a constraint in the supply of at least one of said two materials.

8. The method of Claim 6, wherein said inconsistent results comprise the condition where said actual density falls below said estimated density, without a corresponding change in any controlled variable.

9. The method of Claim 6, wherein said mixing process prepares a wet cement slurry at a hydrocarbon well site; wherein said wet cement is pumped downhole to cement a well casing to a well bore.

10. The method of Claim 6, further comprising the action of restoring said total flow rate to said desired total flow rate,

11. The method of Claim 6, wherein said estimate for said expected density of said mixture is generated by a density observer or a volumetric observer.

## Patentansprüche

1. Steuersystem zum kontinuierlichen Mischen von mindestens zwei Materialien, umfassend:
(a) einen ersten Aktuator (160) und einen zweiten Aktuator (170), beide betreibbar zum Steuern der Flussrate eines einzelnen Materials, welches einem Mischvorgang zugeführt wird,
(b) einen dritten Aktuator (180), betreibbar zum Steuern der Abgabeflussrate aus dem Mischvorgang, und
(c) ein Steuersystem (100), verbunden mit den Aktuatoren und geeignet ausgebildet zum Bereitstellen von:
(i) einer Steuerung der jeweiligen Flussraten von einzelnen Materialien, welche dem Mischvorgang zugeführt werden, mit Bezug auf einen gewünschten Wert der Dichte des resultierenden Schlamms,
das Steuersystem weiterhin **gekennzeichnet durch** Bereitstellen von:
(ii) eine Schätzung der erwarteten Dichte der gemischten Materialien, wobei, wenn die aktuelle Dichte der gemischten Materialien ohne eine entsprechende Änderung bei einer gesteuerten Variablen unter die erwünschte Dichte abfällt, das Steuersystem zeitweise die Gesamtflussrate **durch** den Mischvorgang reduziert, wobei Fehler **durch** Zuführhemmnisse des trockenen Materials zeitweise **durch** eine reduzierten Gesamtflussrate verbessert werden, und
(iii) eine zeitweise Reduzierung der Gesamtflussrate, falls eine Reaktion eines Aktuators auf eine befohlene Erhöhung der Zufuhrflussrate eines flüssigen Materials des Schlamms mangelhaft ist, wobei Fehler **durch** Zuführhemmnisse des flüssigen Materials zeitweise **durch** eine reduzierte Gesamtflussrate verbessert werden.

2. System nach Anspruch 1, wobei die Steuerung der Gesamtflussrate auch auf eine erwünschte Gesamtflussrate durch den Mischvorgang basiert.

3. System nach Anspruch 1, wobei der Schätzwert für die Dichte durch einen Dichtebeobachter oder einen volumetrischen Beobachter erzeugt wird.

4. System nach Anspruch 1, wobei die Gesamtflussrate von Materialien in den Mischvorgang basierend auf das Verweilen der Materialien in dem Mischvorgang gesteuert wird.

5. System nach Anspruch 4, wobei ein Höhenbeobachter zum Schätzen des Verweilens in dem Mischvorgang verwendet wird.

6. Steuerverfahren zum kontinuierlichen Mischen von mindestens zwei Materialien, umfassend die Vorgänge:
(a) Steuern der relativen Proportion und der Gesamtflussrate von zwei Materialien, welche in einen kontinuierlichen Mischvorgang eintreten, um so eine erwünschte Gesamtflussrate und eine erwünschte Dichte der resultierenden Mischung zu erreichen, wobei sich die Materialien in der Dichte unterscheiden,
(b) Erhalten einer Schätzung der erwarteten Dichte der Mischung,
(c) Messen der aktuellen Dichte der Mischung, **dadurch gekennzeichnet, dass**
(d) die Gesamtflussrate zeitweise reduziert wird, wenn die Vorgänge (b) und (c) nicht übereinstimmende Ergebnisse produzieren.

7. Verfahren nach Anspruch 6, wobei die nicht übereinstimmenden Ergebnisse eine Behinderung in der Zufuhr von mindestens einem der zwei Materialien umfassen.

8. Verfahren nach Anspruch 6, wobei die nicht übereinstimmenden Ergebnisse den Zustand umfassen, bei dem die aktuelle Dichte unter die geschätzte Dichte abfällt, ohne dass eine entsprechende Änderung in einer gesteuerten Variablen vorliegt.

9. Verfahren nach Anspruch 6, wobei der Mischvorgang einen nassen Zementschlamm bei einem Kohlenwasserstoff-Bohrplatz zubereitet, wobei der nasse Zement das Bohrloch hinunter gepumpt wird, um ein Bohrlochfutterrohr an ein Bohrloch zu zementieren.

10. Verfahren nach Anspruch 6, weiterhin umfassend den Vorgang des Wiederherstellens der Gesamtflussrate zu der erwünschten Gesamtflussrate.

11. Verfahren nach Anspruch 6, wobei die Schätzung für die erwartete Dichte der Mischung durch einen Dichtebeobachter oder einen volumetrischen Beobachter erzeugt wird.

## Revendications

1. Système de commande pour mélanger en continu au moins deux matériaux, comprenant :
(a) un premier actionneur (160) et un deuxième actionneur (170), chacun utilisable pour réguler le débit d'un matériau individuel distribué dans un processus de mélangeage ;
(b) un troisième actionneur (180), utilisable pour réguler le débit de décharge à partir dudit processus de mélangeage ; et
(c) un système de commande (100) connecté auxdits actionneurs ; et configuré pour fournir :
(i) une régulation des débits respectifs de matériaux individuels distribués dans ledit processus de mélangeage, par rapport à une valeur souhaitée de la densité du lait résultant ;
le système de commande est en outre **caractérisé en ce qu'**il fournit :
(ii) une estimation de la densité prévue des matériaux mélangés ; dans lequel, si la densité réelle des matériaux mélangés est inférieure à la densité souhaitée, sans changement correspondant d'une quelconque variable régulée, alors ledit système de commande réduit temporairement le débit total par l'intermédiaire dudit processus ; moyennant quoi des erreurs dues à des contraintes d'alimentation sur le matériau sec sont temporairement améliorées par débit total réduit ; et
(iii) une réduction temporaire dudit débit total si une réponse d'actionneur à des augmentations commandées de débit d'alimentation d'un composant de matériau liquide du lait est inadéquate ; moyennant quoi des erreurs dues à des contraintes d'alimentation sur ledit matériau liquide sont temporairement améliorées par débit total réduit.

2. Système selon la revendication 1, dans lequel la régulation dudit débit total est également fondée sur un débit total souhaité à travers ledit processus de mélangeage.

3. Système selon la revendication 1, dans lequel ladite valeur estimée pour ladite densité est générée par un dispositif d'observation de densité ou un dispositif d'observation volumétrique.

4. Système selon la revendication 1, dans lequel le débit total de matériaux dans ledit processus de mélangeage est régulé en fonction de la retenue de matériaux dans ledit processus de mélangeage.

5. Système selon la revendication 4, dans lequel un dispositif d'observation de hauteur est utilisé pour estimer ladite retenue dudit processus de mélangeage.

6. Procédé de commande pour mélanger en continu au moins deux matériaux, comprenant les actions consistant à :
(a) réguler la proportion relative et le débit total de deux matériaux entrant dans un processus de mélangeage continu pour ainsi obtenir un débit total souhaité et une densité souhaitée du mélange résultant ; dans lequel les densités desdits matériaux diffèrent ;
(b) maintenir une estimation de la densité prévue dudit mélange ;
(c) mesurer la densité réelle dudit mélange ; et **caractérisé par**
(d) lorsque lesdites actions (b) et (c) produisent des résultats inconsistants, l'action consistant à réduire temporairement ledit débit total.

7. Procédé selon la revendication 6, dans lequel lesdits résultats inconsistants comprennent une contrainte dans l'alimentation en au moins un desdits deux matériaux.

8. Procédé selon la revendication 6, dans lequel lesdits résultats inconsistants comprennent la condition où ladite densité actuelle est inférieure à ladite densité estimée, sans changement correspondant de quelconque variable régulée.

9. Procédé selon la revendication 6, dans lequel ledit processus de mélangeage prépare un lait de ciment humide à un site de puits d'hydrocarbure ; dans lequel ledit ciment humide est pompé vers le fond pour cimenter un tubage de puits à un forage de puits.

10. Procédé selon la revendication 6, comprenant en outre l'action consistant à restaurer ledit débit total audit débit total souhaité.

11. Procédé selon la revendication 6, dans lequel ladite estimation pour ladite densité prévue dudit mélange est générée par un dispositif d'observation de densité ou un dispositif d'observation volumétrique.
